Europäisches Patentamt

(19) European Patent Office

Office européen des brevets

(11) Publication number: **0 235 402**
B1

# EUROPEAN PATENT SPECIFICATION

(45) Date of publication of the patent specification:
08.08.90

(51) Int. Cl.⁵: **B62D 13/04**

(21) Application number: 86201931.2

(22) Date of filing: 05.11.86

(54) Steering for the swivel-supported wheels of a trailer.

(30) Priority: 06.02.86  NL 8600285

(43) Date of publication of application:
09.09.87 Bulletin 87/37

(45) Publication of the grant of the patent:
08.08.90 Bulletin 90/32

(84) Designated Contracting States:
BE DE FR GB NL

(56) References cited:
EP-A- 0 011 884
DE-C- 845 449
DE-U- 7 320 192
FR-A- 1 455 915

(73) Proprietor: KENNIS' MACHINEFABRIEK B.V.,
Wolfswinkel 8, NL-6021 ED Budel(NL)

(72) Inventor: Kennis, Jacobus Petrus Nico Maria, De
Vinne 23, NL-6021 JP Budel(NL)

(74) Representative: Lips, Hendrik Jan George, Ir. et al,
HAAGSCH OCTROOIBUREAU Breitnerlaan 146,
NL-2596 HG Den Haag(NL)

## Description

The invention relates to a steering for the swivel-supported wheels of a verhicle, such as a trailer or semi-trailer, suitable to be coupled with a tractor, said vehicle having one or more supporting axles with at the end of at least one axle swivel-supported wheels, said steering comprising a rod system for controlling a swivel arm connected to a swivel body for steering the relevant wheels, the swivel arms of at least one pair of wheels, being coupled by a rod and said swivel arms being controlled by a steering rod via a lever transmission, said steering rod extending substantially parallel with the longitudinal center line of the vehicle and being connected to the one arm of a crank lever the fulcrum of which is pivotally supported by the vehicle, the other arm of said lever carrying a follower cooperating with a curve plate being pivotally supported by the vehicle and being secured against pivoting with respect to the tractor when coupling the vehicle with the tractor.

Such a steering is known from EP-A 0 011 884. This known steering is intended for a bus and is executed such that the wheels of the bus will follow a very special path.

Now the present patent application in particular relates to the steering for the swivel-supported wheels of a trailer or semi-trailer in which case the wheels will have to withstand much bigger loads e.g. when the vehicle is used on a rough ground.

To fulfil the related requirements a steering according to the present invention is characterized in that the two swivel arms of one pair of wheels are each controlled by a separate steering rod and a relating crank lever, the followers of both crank levers cooperating with one single guiding path incorporated in said curve plate.

By using a separate steering rod and a relating crank lever for controlling the two swivel arms of one pair of wheels, each rod will be less loaded and in case of failure of one part the wheels still will be controlled.

Further the tolerances in the system can be removed in such way that the followers of the crank levers will always engage the outer or the innerside of the guide path of the curve plate. So the steering of the wheels is much more stable and shimmy of the wheels will be prevented.

Although two steering rods are used according to the present invention, only one curve plate is necessary.

According to a preferred embodiment of the invention a swivel arm will be directed substantially towards the longitudinal centre plane of the vehicle and the end of this will be connected to one end of a double armed lever by means of a rod extending substantially horizontally and parallel to the longitudinal centre plane of the vehicle, said double armed lever extending about parallel to the swivel arm and in horizontal direction, the other end of said double armed lever which is located farther away from the longitudinal centre plane being connected to the steering rod.

In this way it can be achieved that the steering rod itself extends at a distance from the longitudinal centre plane of the vehicle, said distance being as large as possible.

This means that said steering rod is extending itself close to the wheels so that the crank levers can have relatively large dimensions and the forces exerted on the steering rod can be limited.

The invention is further elucidated with reference to an embodiment shown in the drawing, in which:

Fig. 1 schematically shows a top view of a tractor with semi-trailer, in a position which the parts are occupying while the vehicle is describing a curve;

Fig. 2 schematically shows a bottom view of the semi-trailer with some swivel supported, steered wheels and the relating steering device;

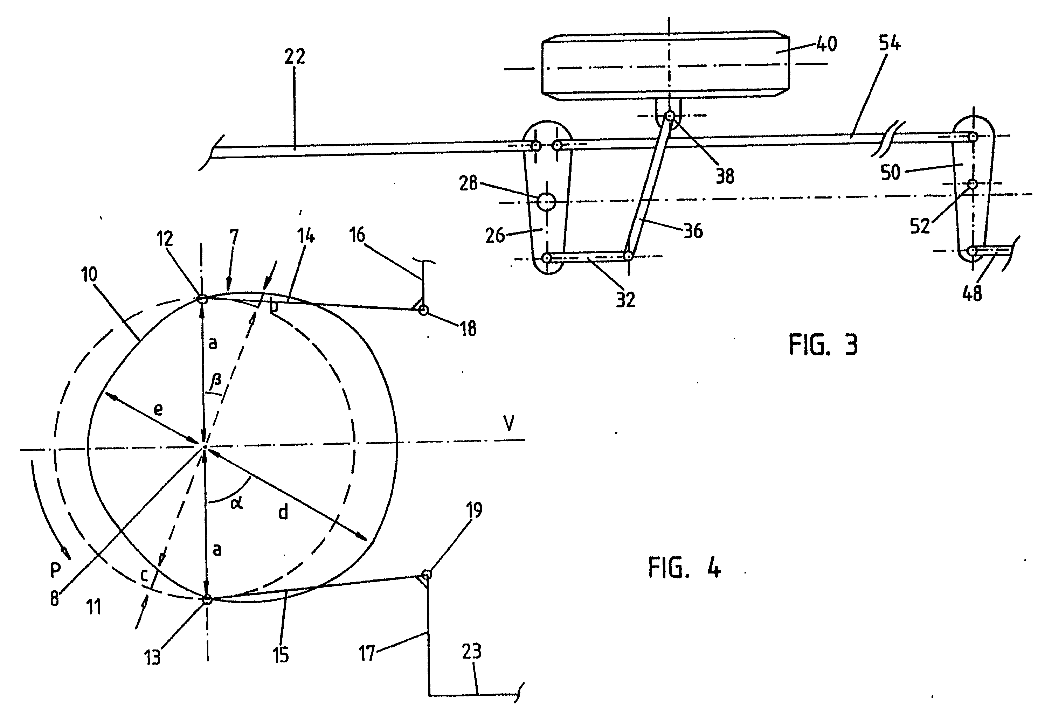

Fig. 3 shows a part of the device of Fig. 2 on an enlarged scale; and

Fig. 4 shows the course of the guide path of the curve plate.

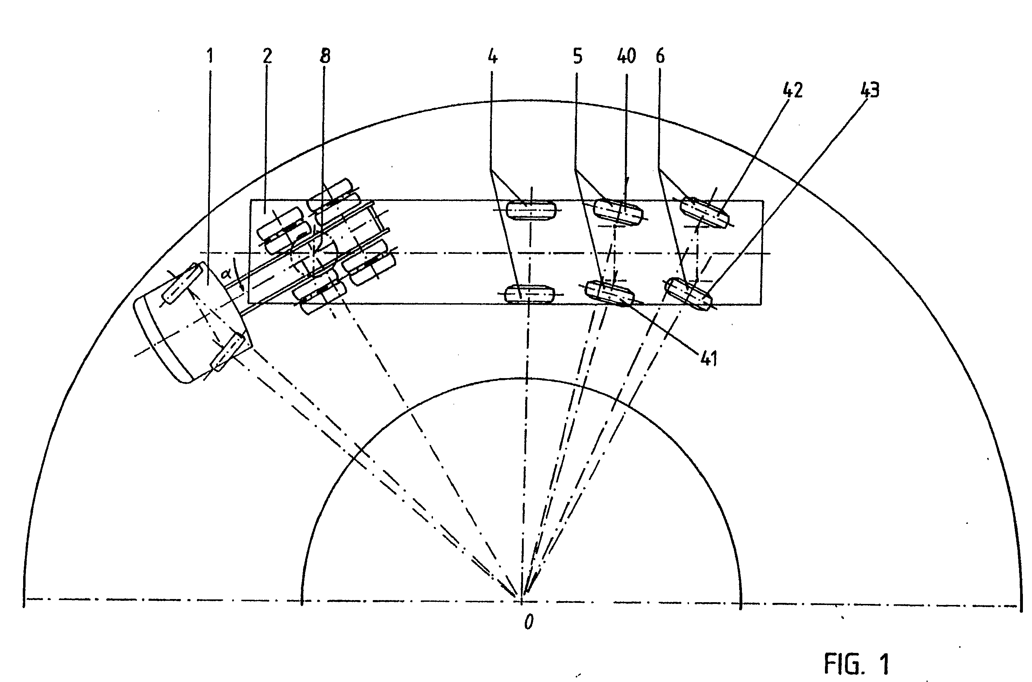

In Fig. 1 the tractor 1 and the semi-trailer 2 coupled therewith describe a circular path around the centre 0. The semi-trailer 2 rests on the rearward part of the tractor 1 and is supported by this in such a way that it is pivotably around an axis via a king pin 8 standing perpendicular to the plane of the drawing. The semi-trailer 2 has three pairs of wheels 4, 5 and 6.

In order to prevent that specific wheels might start to slide in respect of the ground when changing the direction of driving, the wheels 5 and 6 are steerable in such a way that when describing a curve the intersection of the imaginary extended wheel axles always coincides with the centre 0 of the circular movement.

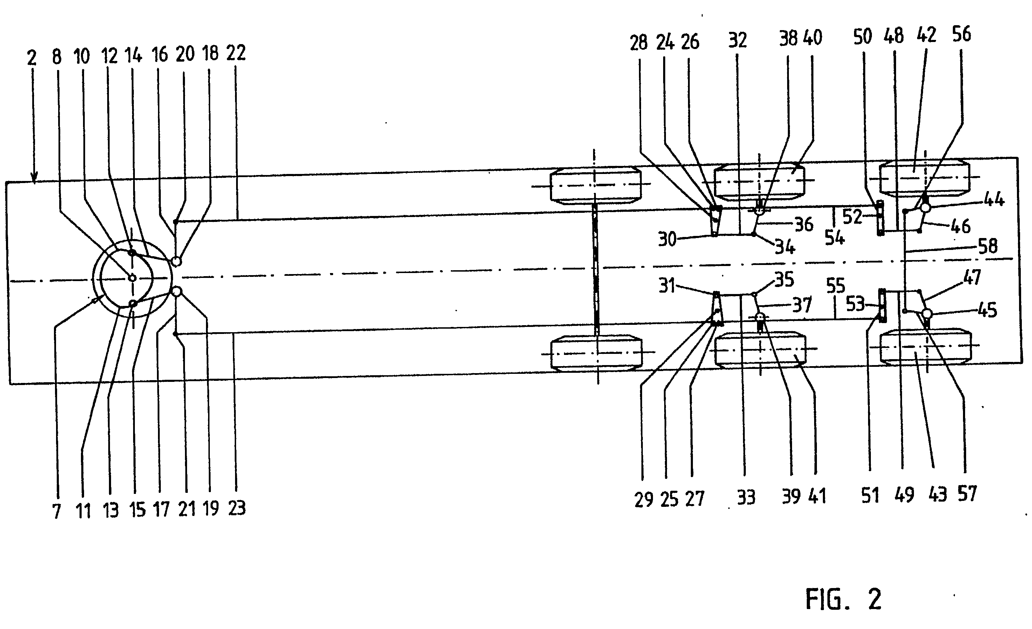

In Fig. 2, which is showing the semi-trailer 2 more in detail, the curve plate 7 is shown which simultaneously forms the coupling plate with which the semi-trailer 2 rests on the rearward part of the tractor 1. The curve plate 7 is pivotable around the king pin 8 and is coupled with the tractor 1 by means of a coupling wedge.

The curve plate 7 is provided with the curve paths 10 and 11 in which the curve rollers 12 and 13 respectively are running. As appears in particular from Fig. 4 the curve paths 10 and 11 may merge into each other.

The curve rollers 12 and 13 are connected to the arms 14 and 15 respectively, each being fixedly connected to the arms 16 and 17 respectively to form a crank lever. The two crank levers are pivotable around the axis 18 and 19 respectively extending parallel with the king pin 8.

The free ends of the arms 16 and 17 are connected to steering rods 22 and 23 respectively by means of joints 20 and 21 respectively. By means of ball joints 24 and 25 the steering rods 22 and 23 respectively are connected with the double armed levers 26 and 27 respectively being pivotable around the fulcrums 28 and 29 respectively. The other ends of said levers 26 and 27 are connected to the rods 32 and 33 respectively by means of the joints 30 and 31 respectively, said rods being attached to the swivel arms 36 and 37 respectively by means of the joints 34 and 35 respectively, said swivel arms cooperating with the swivel bodies 38 and 39 respectively. So when the curve plate 7 rotates the swivel steering parts of the second pair of wheels 40, 41 are controlled.

The swivel bodies 44 and 45 of the third pair of wheels 42 and 43 respectively are provided with the swivel arms 46 and 47 respectively. These swivel arms as such are hingedly connected to the rods 48 and 49 respectively, cooperating with levers 50 and 51 respectively which are hingedly supported in the points 52 and 53 respectively. By means of rods 54 and 55 the levers 50 and 51 respectively are connected to the levers 26 and 27 respectively.

As in particular appears from Fig. 1 the wheels 42 and 43 will have to be deflected further than the wheels 40 and 41 respectively so that the pivot points 52 and 53 respectively of the levers 50 and 51 respectively will have to be staggered in respect of the pivot points 28 and 29 respectively of the levers 26 and 27 respectively. Of course it is, however, also possible to obtain another deflection of the wheels 42 and 43 than of the wheels 40 and 41 respectively in another way.

Furthermore the swivel bodies 44 and 45 of the wheels 42 and 43 respectively additionally are connected with coupling levers 56 and 57 respectively, which are connected to each other by means of the track rod 58.

In this way a particular stable steering device is obtained in which each tolerance in the system can be avoided to a high degree so that shimmy of the wheels is opposed.

Fig. 4 shows in more detail the course of the curve paths 10, 11 which is incorporated in the curve plate 7, the rollers 12 and 13 running through said curve path and being connected to the crank levers 14, 16 and 15, 17 respectively.

The curve plate 7 can rotate around the king pin 8 which is fixedly connected to the tractor 1.

When the tractor 1 and the semi-trailer 2 are in line with each other, the rollers 12 and 13 will be at a distance $\underline{a}$ from the king pin 8 and will be symmetrically positioned in respect of the longitudinal centre plane V of the semi-trailer 2.

In Fig. 4 a circle has been drawn in dashed lines with the kin pin 8 as centre and with the distance $\underline{a}$ as radius.

If now the vehicle combination is going to describe a curve as is shown in Fig. 1, the curve plate 7 will rotate in the direction of the arrow P in respect of the semi-trailer 2. The curve roller 12 then will be moved outwardly and so being brought at a distance from the point 8 which is larger than the distance $\underline{a}$, whereas the curve roller 13 will be brought to a position at a smaller distance from the point 8.

As appears from Fig. 1, however, the angle of rotation of the outer wheel 40 of the pair of wheels 5 will have to be smaller than the angle of rotation of the wheel 41 of said pair of wheels, so that the distance $\underline{a}$ which the curve roller 12 is moving outwardly will have to be smaller than the distance $\underline{b}$ which

the curve roller 13 is moving inwardly. After an angle of rotation β so the distance b will be smaller than the distance c. After an angle of rotation α, which will be 50° at the most, the distances $\underline{b}$ and $\underline{c}$ will not change any more so that those parts of the curve, located on both sides of the pane V, will have the shape of a part of a circle with a radius $\underline{d}$ and $\underline{e}$ respectively.

## Claims

1. Steering for the swivel-supported wheels of a vehicle, such as a trailer or semi-trailer (2), suitable to be coupled with a tractor (1), said vehicle (2) having one or more supporting axles with at the end of at least one axle swivel-supported wheels (5, 6, 40, 41, 42, 43), said steering comprising a rod system for controlling a swivel arm (36, 37; 46, 47) connected to a swivel body (38, 39; 44, 45) for steering the relevant wheels (40, 41; 42, 43), the swivel arms (36, 37; 46, 47) of at least one pair of wheel (40, 41; 42, 43) being coupled by a rod (58) and said swivel arms (36, 37; 46, 47) being controlled by a steering rod (22, 23; 54, 55) via a lever transmission (26, 27, 32, 33, 48, 49, 50, 51), said steering rod (22, 23, 54, 55) extending substantially parallel with the longitudinal center line of the vehicle (2) and being connected to the one arm (16, 17) of a crank lever (14, 16; 15, 17) the fulcrum (18, 19) of which is pivotally supported by the vehicle (2), the other arm (14, 15) of said lever carrying a follower (12, 13) cooperating with a curve plate (7) being pivotally supported by the vehicle (2) and being secured against pivoting with respect to the tractor (1) when coupling the vehicle (2) with the tractor (1), characterized in that the two swivel arms (36, 37; 46, 47) of one pair of wheels (40, 41; 42, 43) are each controlled by a separate steering rod (22, 23, 54, 55) and a relating crank-lever (14, 16; 15, 17), the followers (12, 13) of both crank levers (14, 16; 15, 17) cooperating with one single guiding path (10, 11) incorporated in said curve plate (7).

2. Steering according to claim 1, characterized in that each swivel arm (36, 37, 46, 47) is directed substantially towards the longitudinal centre plane (V) of the vehicle (2) and the end of said swivel arm (36, 37, 46, 47) is connected to one end of a double armed lever (26, 27, 50, 51) by means of a rod (32, 33, 48, 49) extending substantially horizontally and parallel to the longitudinal centre plane (V) of the vehicle (2), said double armed lever (32, 33, 48, 49) extending about parallel to the swivel arm (36, 37, 46, 47) and in horizontal direction, the other end of said double armed lever (32, 33, 48, 49) which is located farther away from the longitudinal centre plane (V) being connected to the steering rod (22, 23, 54, 55).

## Patentansprüche

1. Lenkung für die auf Drehzapfen montierten Räder eines Fahrzeugs wie ein Anhänger oder Sattelauflieger (2) geeignet mit einem Schlepper (1) gekuppelt zu werden, wobei das Fahrzeug (2) eine oder mehrere Tragachsen mit am Ende von wenigstens einer Achse auf Drehzapfen montierten Rädern (5, 6, 40, 41, 42, 43) aufweist, die genannte Lenkung ein Stangensystem zur Steuerung eines Achsschenkelarms (36, 37; 46, 47) verbunden mit einem Achsschenkelkörper (38, 39; 44, 45) zur Lenkung der zugehörigen Räder (40, 41; 42, 43) umfasst, wobei die Achsschenkelarme (36, 37; 46, 47) von wenigstens einem Paar Räder (40, 41; 42, 43) mittels einer Stange (58) gekuppelt sind und die Achsschenkelarme (36, 37; 46, 47) durch eine Lenkstange (22, 23; 54, 55) über eine Hebelübertragung (26, 27, 32, 33, 48, 49, 50, 51) gesteuert werden, die Lenkstange (22, 23, 54, 55) sich im wesentlichen parallel zur Längsmittellinie des Fahrzeugs (2) erstreckt und mit dem einen Arm (16, 17) eines Winkelhebels (14, 16; 15, 17) verbunden ist, dessen Winkelpunkt (18, 19) drehbar durch das Fahrzeug (2) unterstützt wird, der andere Arm (14, 15) des genannten Hebels ein Führungsorgan (12, 13) trägt, das mit einer Kurvenscheibe (7) zusammenarbeitet, die drehbar durch das Fahrzeug (2) unterstützt ist und gegen Verdrehung in bezug auf den Schlepper (1) gesichert ist, wenn das Fahrzeug (2) mit dem Schlepper (1) gekuppelt wird, dadurch gekennzeichnet, dass jeder der zwei Achsschenkelarme (36, 37; 46, 47) von einem Paar Räder (40, 41; 42, 43) durch eine einzelne Lenkstange (22, 23, 54, 55) und einen zugehörigen Winkelhebel (14, 16; 15, 17) gesteuert wird, wobei die Führungorgane (12, 13) der beiden Winkelhebel (14, 16; 15, 17) mit einer einzigen, in der Kurvenscheibe (7) vorgesehenen Führungsbahn (10, 11) zusammenarbeitet.

2. Lenkung gemäss Anspruch 1, dadurch gekennzeichnet, dass jeder Achsschenkelarm (36, 37, 46, 47) im wesentlichen zur Längsmittelebene (V) des Fahrzeugs (2) hin gerichtet ist und das Ende des Achsschenkelarms (36, 37, 46, 47) mit einem Ende eines zweiarmigen Hebels (26, 27, 50, 51) mittels einer Stange (32, 33, 48, 49) verbunden ist, die sich im wesentlichen horizontal und parallel zur Längsmittelebene (V) des Fahrzeugs (2) erstreckt, wobei der zweiarmige Hebel (32, 33, 48, 49) sich ungefähr parallel zum Achsschenkelarm (36, 37, 46, 47) und in horizontaler Richtung erstreckt, während das andere, weiter von der Längsmittelebene (V) entfernt vorgesehene Ende des zweiarmigen Hebels (32, 33, 48, 49) mit der Lenkstange (22, 23, 54, 55) verbunden ist.

**Revendications**

1. Direction pour les roues à support pivotant d'un véhicule, tel qu'un camion-remorque ou semi-remorque (2), pouvant être couplée à un tracteur (1), ledit véhicule (2) disposant d'un ou plusieurs essieux de support avec l'extrémité d'au moins un des essieux des roues à support pivotant (5, 6, 40, 41, 42, 43), ladite direction comportant un dispositif de bielles pour commander un bras pivotant (36, 37; 46, 47) relié à un corps pivotant (38, 39; 44, 45) pour diriger les roues correspondantes (40, 41; 42, 43), les bras pivotants (36, 37; 46, 47) d'au moins une paire de roues (40, 41; 42, 43) étant couplés par une tige (58) et lesdits bras (36, 37; 46, 47) étant commandés par une bielle de direction (22, 23; 54, 55) via une transmission par levier (26, 27, 32, 33, 48, 49, 50, 51), ladite bielle de direction (22, 23, 54, 55) s'étendant globalement parallèlement à la ligne médiane longitudinale du véhicule (2) et étant reliée au bras (16, 17) d'un levier à bras (14, , 6; 15, 17) dont le point d'appui (18, 19) est supporté de manière pivotante par le véhicule (2), l'autre bras (14, 15) dudit levier portant un suiveur de came (12, 13) coopérant avec un plateau incurvé (7) supporté de manière pivotante par le véhicule (2) et fixé de telle sorte qu'il ne peut pivoter par rapport au tracteur (1) lors du couplage du véhicule (2) et du tracteur (1), caractérisée en ce que les deux bras pivotants (36, 37; 46, 47) d'une paire de roues (40, 41; 42, 43) sont chacun commandés par une bielle de direction distincte (22, 23, 54, 55) et un levier à bras correspondant (14, 16; 15, 17), le suiveur de came (12, 13) des deux leviers à bras (14, 16; 15, 17) coopérant avec un seul trajet de guidage (10, 11) intégré audit plateau incurvé (7).

2. Direction selon la revendication 1, caractérisée en ce que chaque bras pivotant (36, 37, 46, 47) est dirigé essentiellement en direction du plan central longitudinal (V) du véhicule (2) et en ce que l'extrémité dudit bras pivotant (36, 37, 46, 47) est reliée à une extrémité d'un levier à deux bras (26, 27, 50, 51) au moyen d'une bielle (32, 33, 48, 49) s'étendant essentiellement horizontalement et parallèlement au plan central longitudinal (V) du véhicule (2), ledit levier à double bras (32, 33, 48, 49) s'étendant environ parallèlement au bras pivotant (36, 37, 46, 47) et dans le sens horizontal, l'autre extrémité dudit levier à double bras (32, 33, 48, 49) qui est situé le plus loin du plan central longitudinal (V) étant reliée à la bielle de direction (22, 23, 54, 55).

FIG. 1

FIG. 2

EP 0 235 402 B1

FIG. 3

FIG. 4

EP 0 235 402 B1